# EUROPEAN PATENT APPLICATION

(11) **EP 4 492 191 A1**
(43) Date of publication of application: **15.01.2025**
(21) Application number: 24185000.7
(22) Date of filing: 27.06.2024
(51) Int. Cl.: G06F 1/16

(54) **MAGNETIC ATTRACTION ASSEMBLY AND DISPLAY DEVICE**

(30) Priority: 10.07.2023 CN 202321800552 U
(71) Applicant: Unilumin Group Co. Ltd., Shenzhen, Guangdong 518103 (CN)
(72) Inventor: JIANG, Xiaosheng, Baoan District, Shenzhen, 518103 (CN); ZHAO, Yongchun, Baoan District, Shenzhen, 518103 (CN); LEI, Song, Baoan District, Shenzhen, 518103 (CN); HE, Jinfeng, Baoan District, Shenzhen, 518103 (CN)
(74) Representative: Herrero & Asociados, S.L.

(57) **Abstract**

Provided are a magnetic attraction assembly and a display device. The magnetic attraction assembly includes first and second magnetic shields and a magnetic member magnetically connected to the second magnetic shield. The first magnetic shield includes a first body portion and a first connection portion. A first receiving cavity is disposed at a side of the first body portion. The magnetic member is disposed at least partially within the first receiving cavity and connected to the first magnetic shield. The second magnetic shield is disposed at another side of the magnetic member and includes a second connection portion and a second body portion disposed surrounding the second connection portion, the second body portion and the second connection portion define a second receiving cavity with an opening facing the first magnetic shield, the first body portion and the magnetic member are disposed at least partially within the second receiving cavity.

## Description

### TECHNICAL FIELD

The present application relates to a field of display technologies, and more particularly, to a magnetic attraction assembly and a display device.

### BACKGROUND

In the related art, a display module and a case of a display device are generally connected by a magnetic attraction structure. Metal dust such as iron chips in the air is easily adsorbed to a surface of the display module and a surface of the magnetic attraction structure under the influence of the magnetic attraction structure, thereby affecting the display effect of the display device.

### SUMMARY

In view of the above, an embodiment of the present disclosure provides provide a magnetic attraction assembly and a display device for reducing the probability of the metal dust adsorbing to the surface of the display device and improving the reliability of the display device.

An embodiment of the first aspect of the present application provides magnetic attraction assembly configured to magnetically connect a case and a display module of a display device, the magnetic attraction assembly including: a first magnetic shield including a first body portion and a first connection portion fixedly connected with each other, where a first receiving cavity is disposed at a side of the first body portion away from the first connection portion; a magnetic member disposed at least partially within the first receiving cavity and connected to the first magnetic shield; and a second magnetic shield disposed at a side of the magnetic member away from the first connection portion, where the second magnetic shield includes a second body portion and a second connection portion, the second body portion is disposed surrounding the second connection portion, the second body portion and the second connection portion together define a second receiving cavity with an opening facing the first magnetic shield, the first body portion and the magnetic member are disposed at least partially within the second receiving cavity, and the magnetic member is magnetically connected to the second magnetic shield.

In some embodiments of the present disclosure, the first magnetic shield may define an extension direction of the magnetic force of the magnetic member, and may shield a magnetic force of the magnetic member extending in a direction towards the case and a magnetic force radially extending, so that the magnetic force of the magnetic member extends in a direction toward the second magnetic shield disposed at the side of display module, thereby reducing the probability that the magnetic force of the magnetic member extends to the case. The second magnetic shield may shield the magnetic force of the magnetic member extending in a direction towards the display module while realizing the magnetic attraction connection with the magnetic member, thereby reducing the probability that the magnetic force of the magnetic member extends to the display module. The first magnetic shield and the second magnetic shield may define the extension direction of the magnetic force of the magnetic member, to reduce the probability that the display device generates magnetism under the influence of the magnetic member, thereby reducing the probability that metal dust is adsorbed to the surface of the display device, and improving the reliability of the display device.

In some embodiments of the present disclosure, the magnetic attraction assembly includes an adsorption member disposed within the second receiving cavity and between the second connection portion and the magnetic member, where the adsorption member is magnetically connected to the magnetic member.

In some embodiments of the present disclosure, a gap exists between the first body portion and the second body portion.

In some embodiments of the present disclosure, a gap exists between the first body portion and the second connection portion.

An embodiment of the first aspect of the present application provides a display device including the magnetic attraction assembly described above, the display device further includes the case and the display module, and the magnetic attraction assembly is disposed between the case and the display module.

In some embodiments of the present disclosure, the magnetic attraction assembly includes a first magnetic shield, a magnetic member, and a second magnetic shield disposed in sequence in a direction from the case to the display module, the magnetic member is disposed at least partially within the first receiving cavity of the first magnetic shield, the magnetic member and the first magnetic shield both are disposed at least partially within the second receiving cavity of the second magnetic shield, the first magnetic shield is connected to the case, and the second magnetic shield is connected to the display module.

In some embodiments of the present disclosure, the first magnetic shield includes a first body portion and a first connection portion fixedly connected with each other, the first connection portion is movably connected to the mounting hole, and the first magnetic shield is movable in a direction close to or away from the case.

In some embodiments of the present disclosure, a first groove or a first protrusion is disposed at the side of the first body portion away from the first connection portion.

In some embodiments of the present disclosure, a second groove or a second protrusion is disposed at a side of the first connection portion away from the first body portion.

In some embodiments of the present disclosure, the second magnetic shield includes a second body portion and a second connection portion, the second body portion is disposed surrounding the second connection portion, an end surface of the second connection portion close to the display module is a binding surface and the binding surface is bound with a surface of the display module.

### BRIEF DESCRIPTION OF THE DRAWINGS

FIG. 1 is a partial block structural diagram of a display device according to an embodiment of the present application.
FIG. 2 is a schematic diagram of an assembly structure of a first magnetic member and a first magnetic shield according to an embodiment of the present application.
FIG. 3 is a schematic block diagram of a second magnetic shield according to an embodiment of the present application.

### List of reference signs:

| | | | | | |
|---|---|---|---|---|---|
| 100: | display device; | 1: | case; | 11: | mounting hole; |
| 2: | display module; | 3: | attraction assembly; | 31: | magnetic member; |
| 32: | first magnetic shield; | 321: | first body portion; | 322: | first connection portion; |
| 323: | first groove; | 324: | second groove; | 33: | second magnetic shield; |
| 331: | second body portion; | 332: | second connection portion. | | |

### DETAILED DESCRIPTION OF EMBODIMENTS

In order to facilitate understanding of the present application, the present application will be described more fully below with reference to the accompanying drawings. exemplary embodiments of the present application are shown in the accompanying drawings. However, the present application may be implemented in many different forms and is not limited to the embodiments described herein. Rather, these embodiments are provided to enable a more thorough and comprehensive understanding of the context of the present application.

Unless defined otherwise, all technical and scientific terms used herein have the same meaning as commonly understood by one of ordinary skill in the art to which the present application belongs. The terminology used herein in the specification of the present application is for the purpose of describing specific embodiments only and is not intended to limit the application. As used herein, the term "and/or" includes any and all combinations of one or more of the relevant listed items.

In describing positional relationships, unless otherwise specified, when an element, such as a layer, film, or substrate, is referred to as being "on" another element, it may be directly on the other element or there may be an intermediate element between them. Further, when a layer is referred to as being "under" another layer, it may be directly under or there may be one or more intermediate elements. It will also be appreciated that when a layer is referred to as being "between" two layers, it may be the only layer between the two layers, or one or more intermediate elements may also be present.

Where "comprising", "having", and "including" are used as described herein, unless an explicit qualifying term such as "only", "consisting of" or the like is used, otherwise another part may be added. Unless stated to the contrary, the singular terms may include the plural and are not to be construed as one in number.

It should be understood that although the terms "first," "second," or the like may be used herein to describe various elements, these elements should not be limited by these terms. These terms are used only to distinguish one element from another. For example, the first element may be referred to as the second element without departing from the scope of the present application, and similarly, the second element may be referred to as the first element.

It should also be understood that in interpreting an element, although not explicitly described, the element is to be construed as including an error range that should be within an acceptable deviation range for a particular value determined by one skilled in the art. For example, "about," "approximately," or "substantially" may mean within one or more standard deviations, and are not limited herein.

Furthermore, in the specification, the phrase "plan distribution view" refers to a drawing when a target portion is viewed from above, and the phrase "cross-section view" refers to a drawing when a cross-section obtained by cutting the target portion vertically is viewed from the side.

Furthermore, the drawings are not drawn at a scale of 1: 1, and the relative dimensions of the elements are drawn by way of example only in the drawings and not necessarily to true scale.

In the related art, the front maintenance of a display screen of a conventional light-emitting Diode (LED) is generally realized by a magnetic attraction product, to realize the connection between the display screen of a display device and a case. The magnetic attraction product generally includes two magnetic members respectively connected to the display screen and the case. The detachable connection of the display screen and the case is realized by the magnetic attraction force between the two magnetic members, it is simple and convenient to realize the connection and easy to maintain. In order to play the role of publicity, the display screen of LED is generally used in heavy traffic situations, such as a shopping mall, a subway, or a high-speed railway. The vibration generated by a larger flow of people is easy to raise dust in the air, and the metal dust such as the iron chip in the dust is easily adsorbed to the surface of the display screen and the surface of the magnetic attraction structure under the influence of the magnetic attraction structure, thereby affecting the display effect of the display device.

Second, the display screen includes a plurality of display modules arranged in an array, and each display module is connected to the case through a plurality of magnetic attraction products. Due to the limitation of the manufacturing precision and the installation precision of the display module, the case, and the magnetic attraction products, there are assembly errors between the display module and the case, between the magnetic members and the display module, between the magnetic members and the case, and the two magnetic members, which affects the overall flatness of the display screen and the display effect of the display device.

In view of the above problems, an embodiment of the present application provides a magnetic attraction assembly and a display device, to reduce the influence of the metal dust on the display device and improve the reliability of the display device.

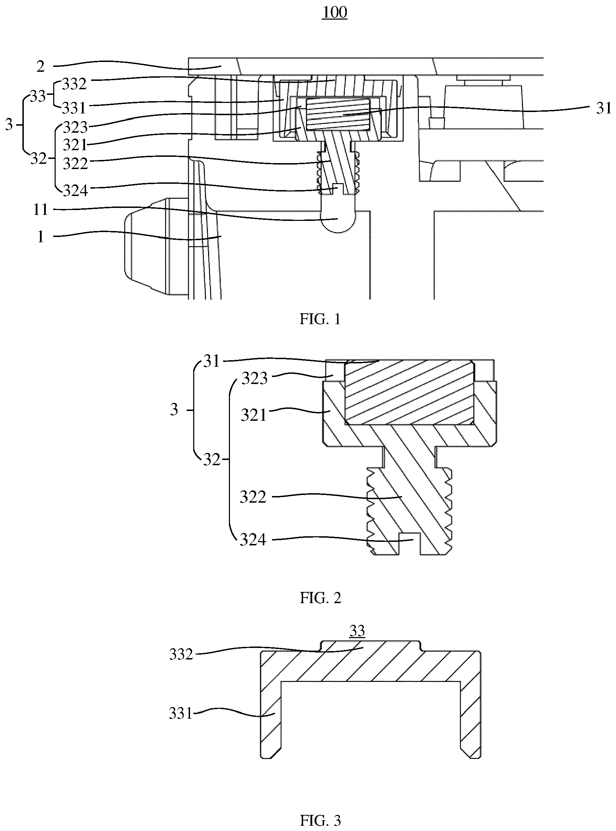

An embodiment of the first aspect of the present application provides a magnetic attraction assembly 3, as shown in FIG. 1, for magnetically connecting a case 1 and a display module 2 of a display device 100. The magnetic attraction assembly 3 includes a magnetic member 31, a first magnetic shield 32, and a second magnetic shield 33. The first magnetic shield 32 includes a first body portion 321 and a first connection portion 322 fixedly connected with each other. A first receiving cavity is disposed at a side of the first body portion 321 away from the first connection portion 322. The magnetic member 31 is at least partially disposed in the first receiving cavity and is connected to the first magnetic shield 32. The second magnetic shield 33 is disposed on a side of the magnetic member 31 away from the first connection portion 322. The second magnetic shield 33 includes a second body portion 331 and a second connection portion 332. The second body portion 331 is disposed surrounding the second connection portion 332. The second body portion 331 and the second connection portion 332 together define a second receiving cavity with an opening facing the first magnetic shield 32. The first body portion 321 and the magnetic member 31 are disposed at least partially within the second receiving cavity. The magnetic member 31 is magnetically connected to the second magnetic shield 33.

In an embodiment of the present application, the display device 100 may include a plurality of display modules 2 arranged in an array. A non-display surface of the display module 2 is connected to the case 1. The case 1 is configured to support and protect the display modules 2. The magnetic attraction assembly 3 is configured to connect the case 1 and the display modules 2. As shown in FIG. 1, the magnetic member 31 is disposed at a side of the case 1 close to the display module 2 and is connected to the case 1. The second magnetic shield 33 is disposed at a side of the display module 2 close to the case 1 and is connected to the display module 2. The magnetic member 31 and the second magnetic shield 33 are magnetically connected to each other, so that the case 1 and the display module 2 are connected. Compared with the connection of the case 1 and the display module 2 by a connection member such as a fastening screw, the connection between the case 1 and the display module 2 by the magnetic attraction assembly 3 may make it easier to disassemble and assemble the display module 2 and the case 1, thereby facilitating the maintenance of the display module 2.

In an embodiment of the present application, as shown in FIGS. 1 and 2, the first magnetic shield 32 includes a first body portion 321 and a first connection portion 322 fixedly connected with each other. The magnetic member 31 is disposed in the first receiving cavity of the first body portion 321. The first body portion 321 may define an extension direction of a magnetic force of the magnetic member 31. The opening of the first receiving cavity faces the display module 2, so that the magnetic force of the magnetic member 31 may extend in a direction toward the second magnetic shield 33 disposed at a side of the display module 2. Therefore, the magnetic member 31 and the second magnetic shield 33 may be magnetically connected without hindrance. Meanwhile, the first body portion 321 may shield a magnetic force of the magnetic member 31 extending in another direction. Specifically, the first body portion 321 may shield the magnetic force of the magnetic member 31 extending in a direction towards the case 1 and the magnetic force of the magnetic member 31 radially extending, so that the probability that the magnetic force of the magnetic member 31 extends to the case 1 is reduced, thereby reducing the probability that the metal dust is adsorbed on the surface of the display device 100, and improving the reliability of the display device 100.

In an embodiment of the present application, as shown in FIGS. 1 and 3, the second magnetic shield 33 includes a second body portion 331 and a second connection portion 332 which are fixedly connected with each other. The magnetic member 31 is disposed in the second receiving cavity, and the opening of the second receiving cavity faces the case 1, so that the magnetic force from the magnetic member 31 extending in a direction towards the display module 2 may be shielded while the magnetic connection of the second magnetic shield 33 and the magnetic member 31 is realized, thereby reducing the probability that the magnetic force of the magnetic member 31 extends to the display module 2, thereby reducing the probability that the metal dust is adsorbed to the surface of the display device 100, and improving the reliability of the display device 100.

Alternatively, the material of the magnetic member 31 may include a magnet, and the first magnetic shield 32 and the second magnetic shield 33 may have a magnetic shielding material, such as a metal or the like.

In an embodiment of the present application, as shown in FIG. 1, the first magnetic shield 32 may define an extension direction of the magnetic force of the magnetic member 31, and may shield a magnetic force of the magnetic member 31 extending in a direction towards the case 1 and a magnetic force radially extending, so that the magnetic force of the magnetic member 31 extends in a direction toward the second magnetic shield 33 disposed at the side of display module 2, thereby reducing the probability that the magnetic force of the magnetic member 31 extends to the case 1. The second magnetic shield 33 may shield the magnetic force of the magnetic member 31 extending in a direction towards the display module 2 while realizing the magnetic attraction connection with the magnetic member 31, thereby reducing the probability that the magnetic force of the magnetic member 31 extends to the display module 2. The first magnetic shield 32 and the second magnetic shield 33 may define the extension direction of the magnetic force of the magnetic member 31, to reduce the probability that the display device 100 generates magnetism under the influence of the magnetic member 31, thereby reducing the probability that metal dust is adsorbed to the surface of the display device 100, and improving the reliability of the display device 100.

In some embodiments, as shown in FIG. 1, there is a gap between the first body portion 321 and the second connection portion 332.

In an embodiment of the present application, as shown in FIG. 1, a fitting surface is disposed on the case 1, the display module 2 directly contacts the fitting surface of the case 1, and the flatness of the display module 2 is controlled by the flatness of the fitting surface. A gap exists between the first body portion 321 and the second connection portion 332 may prevent the contact between the first magnetic shield 32 and the second magnetic shield 33 from affecting the fitting surface of the display module 2 and the case 1 when the display module 2 and the case 1 are connected, and may avoid affecting the flatness of the display module 2. The first body portion 321 is further disposed in the second magnetic shield 33, that is, the second magnetic shield 33 is disposed at the outside of the first magnetic shield 32 and the magnetic member 31, so that the magnetic shielding performance of the magnetic attraction assembly 3 may be further improved, and the magnetic force of the magnetic member 31 extending radially is prevented from being transmitted to the display panel through the gap between the first body portion 321 and the second connection portion 332, thereby improving the reliability of the display device 100.

In an embodiment of the present application, as shown in FIGS. 1 and 3, the second body portion 331 and the second connection portion 332 may be connected into an integrated structure, for example, integrally formed by an injection molding process. The second body portion 331 and the second connection portion 332 may be separately connected, which is not limited hereto in the present application. When the second body portion 331 and the second connection portion 332 are separately connected, the second body portion 331 and the second connection portion 332 may be fixedly connected to the display module 2 by welding, gluing, or the like. Before the display module 2 and the case 1 are assembled, the second body portion 331 and the second connection portion 332 may commonly surround the display module 2 at a side of the display module 2 to form a second receiving cavity, to define the extension direction of the magnetic force of the magnetic member 31. Alternatively, the second connection portion 332 is fixedly connected to the display module 2, and the second body portion 331 is disposed at the outside of the first body portion 321 and around the first body portion 321, and fixedly connected to the first body portion 321. When the case 1 and the display module 2 are assembled, the second body portion 331 abuts the display module 2, and the second connection portion 332 is magnetically connected to the magnetic member 31, to close the opening formed around the second body portion 331, thereby shielding the magnetic force of the magnetic member 31 extending in a direction toward the display module 2.

In an embodiment of the present application, as shown in FIG. 1, when the second connection portion 332 is fixedly connected to the display module 2, and the second body portion 331 is disposed at the outside of the first body portion 321 and around the first body portion 321, and fixedly connected to the first body portion 321. The distance between a side of the second body portion 331 far away from the case 1 and the mounting hole 11 is larger than the distance between a side of the first body portion 321 far away from the case 1 and the mounting hole 11, so that there is a gap between the first body portion 321 and the second connection portion 332 after the case 1 and the display module 2 are assembled, thereby avoiding influence on the flatness of the display module 2.

In some embodiments, as shown in FIG. 1, there is a gap between the first body portion 321 and the second body portion 331. That is, the orthogonal projection of the second receiving cavity on a plan parallel with the display surface of the display module 2 is larger than that of the first receiving cavity, so that the first body portion 321 and the magnetic member 31 may be quickly and accurately placed in the second receiving cavity, and the first magnetic shield 32 and the second magnetic shield 33 may be quickly and accurately clamped, thereby enabling the magnetic member 31 and the second magnetic shield 33 to smoothly contact and be magnetically connected, thereby improving the connection efficiency of the magnetic attraction assembly 3. The first body portion 321 is not in contact with the second body portion 331, and when the display module 2 is disassembled, it is not affected by the frictional resistance between the first body portion 321 and the second body portion 331, thereby reducing the disassembly difficulty.

In an embodiment of the present application, by disposing the magnetic suction assembly 3, the service life of the display device 100 may be increased, the maintenance time of the display module 2 may be reduced, the maintenance efficiency of the display module 2 may be improved, and the display device 100 may be applied to a variety of complex installation environments, such as a more dusty environment, and the air with impurities such as iron chips, etc. Meanwhile, the display module 2 may be "barely mounted" at the outside without panel glass or acrylic plates for protecting the display device 100, thereby saving installation cost of the display device 100, and facilitating installation of the display device 100 in a magnetized environment, such as a subway or an aircraft.

In some embodiments, the magnetic attraction assembly 3 further includes an adsorption member disposed within the second receiving cavity and between the second connection portion 332 and the magnetic member 31. The adsorption member is magnetically connected to the magnetic member 31. The adsorption member may be disposed at a side of the second connection portion 332 away from the display module 2, or may be embedded in the second connection portion 332, to further improve the stability of the connection between the adsorption member and the second magnetic shield 33 while ensuring the magnetic shield function of the second magnetic shield 33 for the adsorption member. The adsorption member may be a magnetically absorbable metal sheet, for example, an iron sheet, or a magnet with the different magnetic property from the magnetic member 31 to realize a magnetically absorbent connection between the adsorption member and the magnetic member 31. Alternatively, the adsorption member and the second magnetic shield 33 may be of the same material, such as iron. The adsorption member and the second magnetic shield 33 may be of different materials, for example, the adsorption member may include a magnet, and the second magnetic shield 33 may include iron (e.g., the second magnetic shield 33 may be an iron shroud) or the like, which is not limited hereto in the present application.

In an embodiment of the present application, when the adsorption member includes a magnet, the second magnetic shield 33 may define the extension direction of the magnetic force of the adsorption member. The opening of the second receiving cavity faces the case 1, so that the magnetic force of the adsorption member extends in a direction toward the magnetic member 31 disposed on a side of the case 1. Thus, the magnetic member 31 and the adsorption member may be connected magnetically without hindrance. Meanwhile, the second magnetic shield 33 may shield the magnetic force of the adsorption member extending in another direction. Specifically, the second magnetic shield 33 may shield a magnetic force of the adsorption member extending in a direction towards the display module 2 and the magnetic force of the adsorption member radially extending, so that the probability that the magnetic force of the adsorption member extends to the display module 2 is reduced, thereby reducing the probability that metal dust is adsorbed to the surface of the display device 100, and improving the reliability of the display device 100.

In an embodiment of the present application, the first body portion 321 is further disposed in the second magnetic shield 33, and the magnetic member 31 and the adsorbing member are both located between the first magnetic shield 32 and the second magnetic shield 33, so that the extension direction of the magnetic force of the magnetic member 31 and the adsorbing member may be further defined, the magnetic shielding effect of the magnetic member 31 and the adsorbing member may be improved, and the magnetic force of the magnetic member 31 and the adsorbing member is effectively prevented from extending out of the first magnetic shield 32 and the second magnetic shield 33, thereby reducing or even eliminating the magnetic force of the magnetic member 31 and the adsorbing member radially extending, so that the surface of the display device 100 has little or no magnetic property, thereby realizing the magnetic shielding of the display device 100.

Alternatively, the magnetic member 31 may be a circular magnet, the adsorption member may be a circular metal sheet. Accordingly, the first receiving cavity and the second receiving cavity may be cylindrical receiving cavities. Alternatively, the magnetic member 31 may be a rectangular magnet, and the adsorption member 31 may be a rectangular metal sheet. Accordingly, the first receiving cavity and the second receiving cavity may be rectangular-shaped receiving cavities. The shapes and sizes of the first receiving cavity and the second receiving cavity may be set in correspondence with the shapes and sizes of the magnetic member 31 and the adsorption member according to actual requirements, which are not limited hereto in the present application.

In some embodiments, the display device 100 includes a plurality of display modules 2. Each of the display modules 2 is connected to the case 1 by six to fourteen ones of the magnetic attraction assemblies 3. The six to fourteen ones of the magnetic attraction assemblies 3 may be evenly distributed between the display modules 2 and the case 1. The size and number of the magnetic attraction assemblies 3 may be selected according to the size and number of the display modules 2 in the display device 100, so that the display modules 2 and the case 1 have a higher connection stability. Alternatively, the number of the magnetic attraction assemblies 3 may be less than 6 or more than 14 depending on the area of the display module 2, and may be set according to actual requirements, which is not limited hereto in the present application.

An embodiment of the second aspect of the present application provides a display device 100, as shown in FIG. 1, including a magnetic attraction assembly 3 as described above. The display device 100 further includes a case 1 and a display module 2. The magnetic attraction assembly 3 is disposed between the case 1 and the display module 2.

In the display panel included in the display device 100 according to an embodiment of the present application, as shown in FIG. 1, the first magnetic shield 32 may define an extension direction of the magnetic force of the magnetic member 31, and may shield a magnetic force of the magnetic member 31 extending in a direction towards the case 1 and a magnetic force radially extending, so that the magnetic force of the magnetic member 31 extends in a direction toward the second magnetic shield 33 disposed at the side of display module 2, thereby reducing the probability that the magnetic force of the magnetic member 31 extends to the case 1. The second magnetic shield 33 may shield the magnetic force of the magnetic member 31 extending in a direction towards the display module 2 while realizing the magnetic attraction connection with the magnetic member 31, thereby reducing the probability that the magnetic force of the magnetic member 31 extends to the display module 2. The first magnetic shield 32 and the second magnetic shield 33 may define the extension direction of the magnetic force of the magnetic member 31, to reduce the probability that the display device 100 generates magnetism under the influence of the magnetic member 31, thereby reducing the probability that metal dust is adsorbed to the surface of the display device 100, and improving the reliability of the display device 100.

In some embodiments, as shown in FIG. 1, the magnetic attraction assembly 3 includes a first magnetic shield 32, a magnetic member 31, and a second magnetic shield 33 disposed in sequence in a direction from the case 1 to the display module 2. The magnetic member 32 is disposed at least partially within the first receiving cavity of the first magnetic shield 32. The magnetic member 31 and the first magnetic shield 32 both are disposed at least partially within the second receiving cavity of the second magnetic shield 33. The first magnetic shield 32 is connected to the case 1. The second magnetic shield 33 is connected to the display module 2.

In some embodiments, as shown in FIG. 1, the case has a mounting hole 11. The first magnetic shield 32 includes a first body portion 321 and a first connection portion 322 which are fixedly connected with each other. The first connection portion 322 is movably connected to the mounting hole 11, and the first magnetic shield 32 is movable in a direction close to or away from the case 1.

In an embodiment of the present application, as shown in FIG. 1, the first connection portion 322 is disposed at a side of the first body portion 321 away from the display module 2. The first connection portion 322 is in threaded connection with the mounting hole 11. The first magnetic shield 32 is connected to the case 1 through the first connection portion 322 and the mounting hole 11. Since the first connection portion 322 is in threaded connection with the mounting hole 11, the position of the first magnetic shield 32 may be adjusted by adjusting the depth of the threaded connection between the first connection portion 322 and the mounting hole 11, to enable the first magnetic shield 32 to be moved in a direction close to or away from the case 1, so that the assembly error between the first magnetic shield 32 and the case 1 is reduced, the influence of the assembly error on the flatness of the display module 2 is reduced, and the display effect of the display device 100 is improved. Moreover, the threaded connection has good connectivity, so that the connection strength between the first magnetic shield 32 and the case 1 is good, the connection is stable and reliable, and the installation operation of the first magnetic shield 32 is simple and fast.

In an embodiment of the present application, as shown in FIG. 1, the first magnetic shield 32 moves while the first magnetic shield 32 drives the magnetic member 31 to move together, so that the position of the magnetic member 31 may be adjusted to adjust the position of the assembly surface, i.e., the contact surface, of the magnetic member 31 and the second magnetic shield 33, thereby reducing the assembly error between the magnetic member 31 and the second magnetic shield 33, reducing the influence of the assembly error on the flatness of the display module 2, improving the magnetic attraction stability of the magnetic member 31 and the second magnetic shield 33, and improving the connection stability of the display module 2 and the case 1.

In an example, as shown in FIG. 1, when the processing accuracy of the contact surface of the case 1 or the display module 2 is poor, the display surface of a portion of the display module 2 is lower or higher than the display surface of another display module 2 adjacent to it, so that the flatness of the display modules 2 is poor, and the display effect is affected. To this end, the depth of the connection between the first connection portion 322 and the mounting hole 11 may be adjusted. The first magnetic shield 32 may move in a direction away from or close to the case 1, to push the display module 2 up or move the display module 2 down, so that the display surface of each display module 2 is parallel to and in the same plane as the display surface of the adjacent display module 2, thereby improving the flatness of the display modules 2. It is also possible to finely process the region where the display module 2 and the case 1 are in direct contact, to reduce the assembly error between the display module 2 and the case 1, and further improve the flatness of the display surface of the display module 2.

In some embodiments, the mounting hole 11 is disposed with an internal thread, and the first connection portion 322 is disposed with an external thread. The connection of the first magnetic shield 32 to the case 1 is effected by a threaded connection of the internal thread and the external thread.

In some embodiments, a first groove 323 or a first protrusion is disposed at the side of the first body portion 321 away from the first connection portion 322. The opening of the mounting hole 11 faces the display module 2, and the first magnetic shield 32 may be positionally adjusted and installed/detached from the side of the case 1 close to the display module 2 by the first groove 323 or the first protrusion. Specifically, when the first groove 323 is disposed at the side of the first body portion 321 away from the first connection portion 322, an adjustment tool having a convex structure, the shape and the size of the convex structure corresponding to the shape and the size of the first groove 323, may be provided. By engaging the convex structure on the adjustment tool with the first groove 323, the first magnetic shield 32 may be rotated to generate a corresponding position change, so that the first magnetic shield 32 may be positionally adjusted and installed/detached. When the first protrusion is disposed at the side of the first body portion 321 away from the first connection portion 322, an adjustment tool having a concave structure, the shape and the size of the concave structure corresponding to the shape and the size of the first protrusion, may be provided. By engaging the concave structure on the adjustment tool with the first protrusion, the first magnetic shield 32 may be rotated to generate a corresponding position change, so that the first magnetic shield 32 may be positionally adjusted and installed/detached. The mounting hole 11 may be a through hole or a blind hole.

Alternatively, the number of first grooves 323 or the first protrusions may be one or more. When the number of the first grooves 323 or the first protrusions is a plurality, respective ones of the first grooves 323 or the first protrusions is disposed evenly and spaced apart in the circumferential direction of the first magnetic shield 32. The first grooves 323 or the first protrusions are disposed in pairs. Alternatively, the first groove 323 may be a linear groove or a cross-shaped groove so that the adjustment tool is engaged with the first groove 323 to adjust the position of the first magnetic shield 32. The number and shape of the first grooves 323 may be set according to actual requirements, which are not limited hereto in the present application.

In some embodiments, a second groove 324 or a second protrusion is disposed at a side of the first connection portion 322 away from the first body portion 321, and the first magnetic shield 32 may be positionally adjusted and installed/detached from the side of the case 1 away from the display module 2 by the second groove 324 or the second protrusion. Specifically, when the second groove is disposed at the side of the first connection portion 322 away from the first body portion 321, an adjustment tool having a convex structure, the shape and the size of the convex structure corresponding to the shape and the size of the second groove 324, may be provided. By engaging the convex structure on the adjustment tool with the second groove 324, the first magnetic shield 32 may be rotated to generate a position change, so that the first magnetic shield 32 may be positionally adjusted and installed/detached. When the second protrusion is disposed at the side of the first connection portion 322 away from the first body portion 321, an adjustment tool having a concave structure, the shape and the size of the concave structure corresponding to the shape and the size of the second protrusion, may be provided. By engaging the concave structure on the adjustment tool with the second protrusion, the first magnetic shield 32 may be rotated to generate a corresponding position change, so that the first magnetic shield 32 may be positionally adjusted and installed/detached.

In an embodiment of the present application, as shown in FIGS. 1 and 2, before the display module 2 is connected to the case 1, the first magnetic shield 32 may be rotated by the first groove 323 or the first protrusion, thereby adjusting the position of the first magnetic shield 32. After the display module 2 is connected to the case 1, the first groove 323 or the first protrusion is located in the second receiving cavity, and the first magnetic shield 32 may be rotated by the second groove 324 or the second protrusion, thereby adjusting the position of the first magnetic shield 32. The position of the first magnetic shield 32 may be adjusted in both sides of the mounting hole 11, that is, opposite sides of the case 1, under the cooperative action of at least one of the first groove 323 or the first protrusion and at least one of the second groove 324 or the second protrusion, so that the position of the first magnetic shield 32 may be adjusted before and after the display module 2 is connected to the case 1. The adjustment method is simple and efficient, so that the connection stability of the case 1 and the display module 2 may be further improved, the flatness of the display module 2 is improved, and the display effect of the display device 100 is improved.

Alternatively, the second groove 324 may be a linear groove or a cross-shaped groove, and the adjustment tool may be a linear screwdriver or a cross screwdriver. The shape of the second groove 324 may be provided according to actual requirements, which is not limited hereto in the present application.

In some embodiments, the second magnetic shield 33 includes the second body portion 331 and the second connection portion 332. The second body portion 331 is disposed around the second connection portion 332, and an end surface of the second connection portion 332 close to the display module 2 is a binding surface, and the binding surface is bound with the surface of the display module 2. The binding surface of the second connection portion 332 may be fixedly connected to the surface of the display module 2 by welding, gluing, or the like. The second connection portion 332 is directly bound to the display module 2 without a connection positioning structure such as a connection post at a side of the second connection portion 332 close to the display module 2. The display module 2 does not need to be disposed with a connection hole, or the like, so that the processing steps of the display device 100 may be reduced, the production efficiency of the display device 100 may be improved, and the production cost may be reduced.

The technical features in the above-described embodiments may be combined arbitrarily. For the sake of brevity, not all possible combinations of the technical features in the above-described embodiments are described. However, the combinations of these technical features should be considered to be within the scope of the present description as long as they do not contradict each other.

The above-described embodiments provide only a few embodiments of the present application, and the description is more specific and detailed, but is not therefore to be construed as limiting the scope of the present application. It should be noted that several variations and modifications may be made by those of ordinary skill in the art without departing from the spirit and scope of the present application. Accordingly, the scope of the present patent should be subjected to the appended claims.

## Claims

1. A magnetic attraction assembly (3) configured to magnetically connect a case (1) and a display module (2) of a display device (100), **characterized in that** the magnetic attraction assembly (3) includes:
a first magnetic shield (32) including a first body portion (321) and a first connection portion (322) fixedly connected with each other, wherein a first receiving cavity is disposed at a side of the first body portion (321) away from the first connection portion (322);
a magnetic member (31) disposed at least partially within the first receiving cavity and connected to the first magnetic shield (32); and
a second magnetic shield (33) disposed at a side of the magnetic member (31) away from the first connection portion (322), wherein the second magnetic shield (33) includes a second body portion (331) and a second connection portion (332), the second body portion (331) is disposed surrounding the second connection portion (332), the second body portion (331) and the second connection portion (332) together define a second receiving cavity with an opening facing the first magnetic shield (32), the first body portion (321) and the magnetic member (31) are disposed at least partially within the second receiving cavity, and the magnetic member is magnetically connected to the second magnetic shield (33).

2. The magnetic attraction assembly (3) of claim 1, **characterized in that** the magnetic attraction assembly (3) further includes an adsorption member disposed within the second receiving cavity and between the second connection portion (332) and the magnetic member (31), wherein the adsorption member is magnetically connected to the magnetic member (31).

3. The magnetic attraction assembly (3) of claim 1, **characterized in that** a gap exists between the first body portion (321) and the second body portion (331).

4. The magnetic attraction assembly (3) of claim 1, **characterized in that** a gap exists between the first body portion (321) and the second connection portion (332).

5. A display device (100) including the magnetic attraction assembly (3) of any one of claims 1 to 4, wherein the display device (100) further includes the case (1) and the display module (2), and the magnetic attraction assembly (3) is disposed between the case (1) and the display module (2).

6. The display device (100) of claim 5, **characterized in that** the magnetic attraction assembly (3) includes the first magnetic shield (32), the magnetic member (31), and the second magnetic shield (33) disposed in sequence in a direction from the case (1) to the display module (2), the magnetic member (31) and the first magnetic shield (32) both are disposed at least partially within the second receiving cavity of the second magnetic shield (33), the first magnetic shield (32) is connected to the case (1).

7. The display device (100) of claim 6, **characterized in that** the case (1) has a mounting hole (11); the first connection portion (322) is movably connected to the mounting hole (11), and the first magnetic shield (32) is movable in a direction close to or away from the case (1).

8. The display device (100) of claim 7, **characterized in that** a first groove (323) or a first protrusion is disposed at the side of the first body portion (321) away from the first connection portion (322).

9. The display device (100) of claim 7, **characterized in that** a second groove (324) or a second protrusion is disposed at a side of the first connection portion (322) away from the first body portion (321).

10. The display device (100) of claim 6, **characterized in that** an end surface of the second connection portion (332) close to the display module (2) is a binding surface and the binding surface is bound with a surface of the display module (2).
